# EUROPEAN PATENT APPLICATION

(11) **EP 0 672 593 A2**
(43) Date of publication of application: **20.09.1995**
(21) Application number: 95500020.3
(22) Date of filing: 24.02.1995
(51) Int. Cl.: B65D 85/08

(54) **Improved packaging to pack largely cylindrical and drawn out bodies such as artificial casings**

(30) Priority: 10.03.1994 ES 9400493
(71) Applicant: VISCOFAN, Industria Navarra de Envolturas Celulosicas, S.A., E-31007 Pamplona (Navarra) (ES)
(72) Inventor: Iso Artieda, José A. c/o Viscofan Industria Nav., E-31007 Pamplona (Navarra) (ES)
(74) Representative: Carpintero Lopez, Francisco

(57) **Abstract**

Such is based upon the grouping of the cords of artificial casings such as cellulose, reinforced cellulose, collagen or plastic casings (1) to form overlying rows arranged as a quincunx thereby to achieve a substantially prismatic and rectangular block which is by reason of such quincunx arrangement provided at one of its side faces with longitudinal tongues (2) and on the opposite face with complementary grooves (3). Each block of cords (1) is stabilised with the assistance of a see-through cover (4) made of recyclable material that is acceptable to be present in a food product stuffing room from a hygienic and sanitary standpoint, such as low density polythene, which suitably protects such casings (1), definitive stabilisation being provided with the assistance of annular transverse bands (5) and a longitudinal band (6), likewise made of recyclable material, preferably expanded polypropylene.

## Description

### OBJECT OF THE INVENTION

The present invention relates to a packaging that has been particularly devised to pack and carry the cords conformed by artificial casings, though it is just as useful in any other practical cases in which a similar degree of performance is required, which packaging has been devised to optimise available space and minimise storage and carriage costs. The invention moreover ensures a correct arrangement of the cord packagings avoiding misarrangement and subsequently misuse in stuffing. It is also important to successfully pack artificial casings in materials that are hygienically and sanitarily acceptable to be present in a stuffing room. It is also interesting for the material to be recyclable and generate as little packing waste as possible.

### BACKGROUND OF THE INVENTION

It is well-known that artificial casings, of which there are several kinds: cellulose, regenerated cellulose, reinforced or fibrous cellulose, plastic and regenerated animal collagen-based casings, are marketed conforming sort of cords wherein the said casings appear to be substantially retracted, to the extent that a cord having a length of around 20 to 50 centimetres stores some 70 useful metres of cellulose casing.

These dimensions are given by market requirements, just as the market establishes that the said cellulose casing cords must be grouped or packed to form blocks in which 50 units are generally available, though the unit number can vary in accordance with the client's needs.

Furthermore, and quite naturally, the space the said units take up must be as little as possible in order for the storage and carriage costs to be likewise reduced.

In this sense it is known from US patent numbers 5,137,153 and 5,228,572 for eight-angled prismatic packets or bales to be formed wherein the cellulose casing cords have a quincunx arrangment, i.e. lying extremely close to each other, the said eight-angled prismatic conformation tending to adopt an irregular hexagonal section though not quite since the said number of units the packet must have does not allow this.

This means that in subsequently intercoupling packets to form a larger carried unit, and also seeking to optimise the said coupling by a quincunx arrangement, rectangular section and rather large empty or dead spaces remain between the various packets that adversely affect the space taken up by the assembly and hence the additional storage and above all carriage costs.

These patents moreover focus their characteristics exclusively on the means for grouping and fixing the drawn out bodies, i.e. the cords of cellulose casings, and thus they are fixed to one another by means of a lateral paper or plastic band which may even be divided into several parts, this retention being carried out by band, but at all times purely with the aim of holding the said bodies.

These groupings have no side or end covers, though such may optionally be provided, which shows that there is a lack of foresight and indeed an absence of definitive adaptation for a watertight seal to be provided, which can cause the contents to dry up and be prematurely aged and for unwanted dust and materials to reach into the same.

Another known solution for this type of groupings are simple cardboard boxes, with one side having deformable bodies, for instance polyurethane foam bodies, that provide a pressure fit in these bodies but wherein the spaces left by the drawn out bodies between each other means that there is a large amount of wasted space. Now therefore, in this case the said boxes do not allow any interstices between then, and space is made the most of, and yet there are such interstices inside every box, due to the characteristics of the grouping of the elements to be contained, wherefore waste of space is truly significant. Furthermore, the materials the boxes are made of are unacceptable from a hygienic and sanitary standpoint inasmuch as there is a risk of mould or unwanted contamination culturing or growing, and thus there must be a tendency to eliminate their presence in stuffing rooms. The laws of various countries are slowly tending to eliminate such presence.

It is also important to reduce the quantity of waste generated by the packaging, and thus save on handling, carriage, storage and recycling costs.

### DESCRIPTION OF THE INVENTION

The packaging to pack cylindrical bodies subject of the invention fully solves the various aspects of the problems aforesaid, allowing on the one hand the space available to be optimised and thus for storage and above all carriage costs to be therefore positively affected, the materials used in such packaging being at the same time fully recyclable and acceptable in a stuffing chamber, the above whilst observing market requirements as to number of product units to be found within every packet.

More specifically and in order to achieve the above, the packaging subject hereof starts with a quincunx grouping of a number of rows of cellulose casing cords, preferably five, such that their quincunx distribution shall conform a substantially prismatic block, one of its side faces having two or more longitudinal tongues defined by the cords taking up the even positions, and the same number of complementary grooves on the opposite side likewise taking up the even position, which allows a tongue-and-groove coupling between packets and hence the space available to be used entirely.

Finally, an additional result of the invention is to achieve a packaging preventing the casings therein packed from taking up unwanted or unfeasible positions.

The direction in which casings are stuffed is predetermined by the fact that they must be unfolded by hand to avoid severance, one of their ends having at times to be sealed.

The invention requires the packets of casings to be arranged in an only direction, and thus the user need not verify the direction of stuffing but the once.

Each group of casing cords, in the arrangement set out in the previous paragraph, is fixed with the assistance of a low density polythene or other plastic material casing, which casing ensures a perfect protection for the packed product.

In order to definitively fix the said casing and hence the group of casing cords, two assemblies comprising one or more annular bands have been provided arranged at a right angle to each other, preferably two bands at a right angle to the said cords and a longitudinal band at a right angle to the previous bands and hence parallel to the cords. These bands are in turn made of expanded polypropylene or other like wholly recyclable plastic material that is acceptable in meat product packaging rooms.

In any event the ends of the said bands overlap in order to be easily released by tearing or severing the contact area.

In accordance with yet another characteristic of the invention the said bands are made of a slightly deformable material and thus they allow on the one hand sufficient deformation for the pack to the seized, thereby expediting hand carriage thereof, and on the other also side tonguing-and-grooving between packets and hence the targeted taking up of little space.

The invention is just as useful to pack the other types of artificial casings existing on the market, namely collagen casings, reinforced regenerated cellulose casings (or fibrous casings) or plastic casings.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure 1.- Is an overview of a packaging to pack largely cylindrical and drawn out bodies, in particular artificial casing cords, made in accordance with the improvements subject of the present invention.

Figure 2.- Is a profile view of the assembly shown in the above figure.

Figure 3.- Is a close-view of the side coupling between cords.

Figure 4.- Is a perspective close view of the operation to open or uncouple the bands holding the grouping of cords or cylindrical bodies.

Figure 5.- Finally shows an embodiment between various packets as shown in figures 1 and 2 to define a larger packed assembly.

### PREFERRED EMBODIMENT OF THE INVENTION

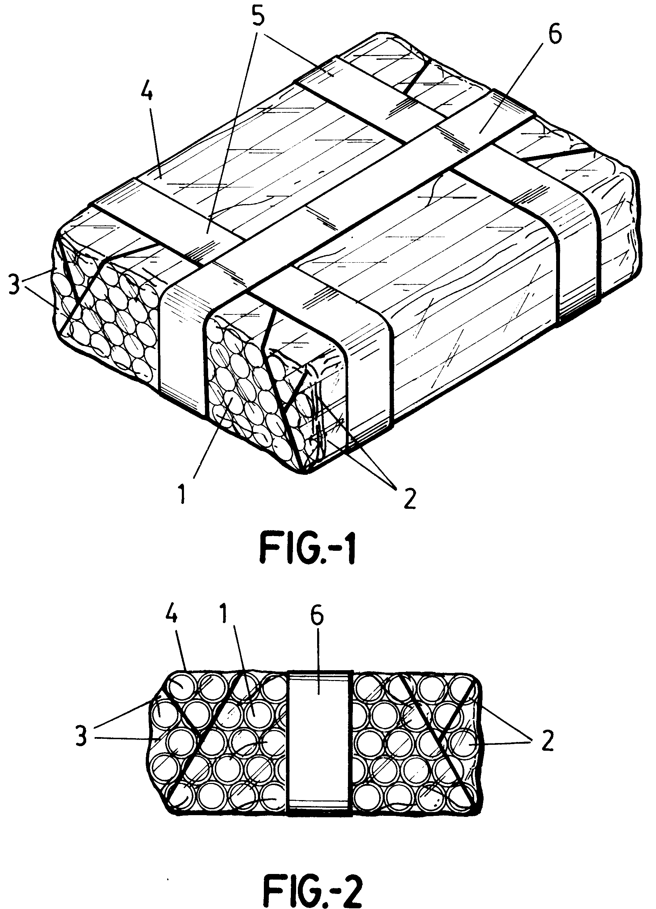

With reference to the figures the packaging subject hereof is based upon a quincunx arrangement of a number of artificial casing cords (1), in particular comprising five overlying rows of ten units each one that on the whole, and as shown in particular in figure 2, define a substantially prismatic block with a pair of longitudinal tongues (2) on one face complementing a pair of grooves (3) located on the opposite face.

The artificial casing cords (1) thus arranged or interrelated are definitively stabilised with the assistance of a preferably see-through covering sheet (4). The sheet can be made of low density polythene, sliding or otherwise, with a gauge of some 250 ± 5%, though other gauges are likewise acceptable and lie within the scope of the invention, a density of 0.9222 ± 0.001 g/cm³ and a fluidity index of 2.5 ± 0.5 g/10 min, though other indices are likewise acceptable and lie within the scope of the invention.

In any event and as figure 1 particularly shows this see-through sheet (4) duly folded upon the block of cords (1) establishes a substantially watertight seal therefor that ensures a perfect protection of the artificial casing from environmental effects.

The definitive fixing of this see-through cover (4) is carried out with the assistance of annular bands, some crosswise (5) and others lengthwise (6), preferably two of the first kind and one of the latter kind, preferably made of expanded polypropylene, with a gauge of 170 ± 10%, a breaking tension > 80 and a stretch > 30, which material is 100% recyclable, as the material of the see-through cover (4).

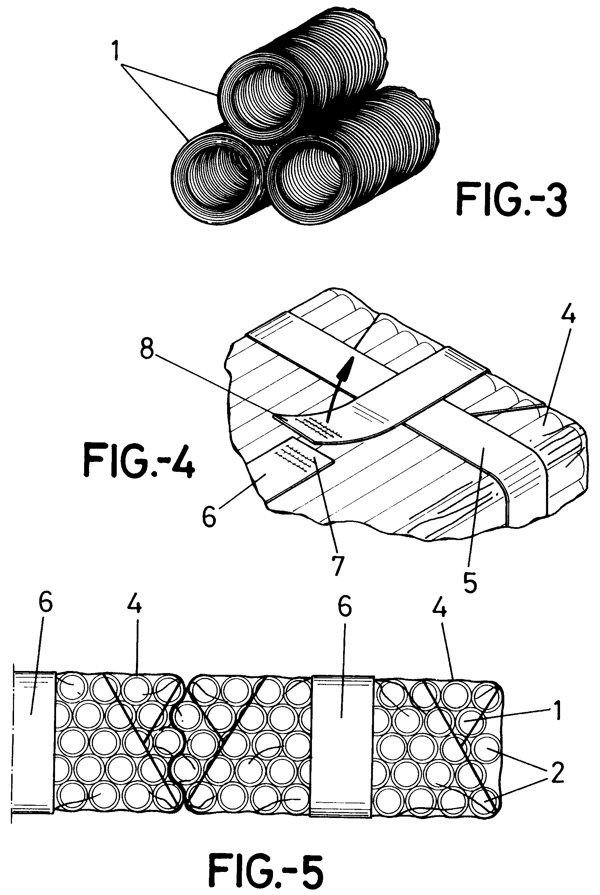

The special arrangement of the artificial casing cords (1) means that the space available within every packet is optimised, and coupling between packets, as shown in figure 5, retains this optimisation feature inasmuch as the longitudinal tongues (2) on every packet fit in the grooves (3) on the immediately adjacent packet because of the deformability of the material with which the see-through cover (4) and the transverse bands (5) as such are made, which deformability moreover, as aforesaid, allows an easy manual grasping of the packet through any of the bands (5) or (6) which substantially expedites the handling of such packets.

The artificial casing cords (1) are perfectly stabilised lengthwise through the folding as such of the casing, as shown in figure 3, while the bands (5) and (6) not only perform satisfactorily as a fixing means but close upon each other with a partial overlap at their ends (7), fixed for instance by heat welding, ultrasounds, pressure or adhesives or any other joining means, defining a small manual grasping tab (8) that expedites tearing when the said bands are eliminated.

## Claims

**1.-** An improved packaging to pack largely cylindrical and drawn out bodies such as artificial casings, characterised in that the said cylindrical and drawn out bodies (1) are grouped to form overlying rows in a quincunx arrangement, defining a substantially parallelepiped block, one of its faces being provided with longitudinal tongues (2) defined by the cylindrical bodies projecting in such quincunx arrangement, whereas the opposite face is in turn provided with grooves matching such tongues, thereby for such blocks to be laterally intercouplable by tonguing-and-grooving, optimising the available space and preventing a faulty arrangement of the packets, the cylindrical bodies belonging in a certain packet, with the relative arrangement aforesaid, being provided to receive a plastic cover (4) as a grouping element that establishes a substantially watertight seal of the packet and being particular in that the said plastic casing is stabilised with the assistance of grouping bands (5) and (6), pursuant to perpendicular axes, some crosswise and some lengthwise.

**2.-** An improved packaging to pack largely cylindrical and drawn out bodies such as artificial casings, as in claim 1, characterised in that the said casing (4) is made of low density polythene or other similar and fully recyclable material.

**3.-** An improved packaging to pack largely cylindrical and drawn out bodies such as artificial casings, as in the above claims, characterised in that each packet is provided with at least a transverse band (5) relative to the axis of the cylindrical bodies and at least a band (6) at a right angle to the previous band or bands.

**4.-** An improved packaging to pack largely cylindrical and drawn out bodies such as artificial casings, as in claims 1 and 3, characterised in that the bands (5) and (6) are made of expanded polypropylene or other like plastic material.

**5.-** An improved packaging to pack largely cylindrical and drawn out bodies such as artificial casings, as in claims 1, 3 and 4, characterised in that the bands (5) and (6) overlap at their ends (7) where they close upon each other, to define a small tab (8) for the same to be seized and detached or rendered independent.

**6.-** An improved packaging to pack largely cylindrical and drawn out bodies such as artificial casings, as in claims 1 and 3 to 4, characterised in that the bands (5) and (6) are made of a deformable material that on the one hand allows any of them to be seized by hand to expedite manipulation of the packet, and on the other side coupling and tonguing-and-grooving between packets.

**7.-** An improved packaging to pack largely cylindrical and drawn out bodies such as artificial casings, as in the above claims, characterised in that the artificial casing is a cellulose casing.

**8.-** An improved packaging to pack largely cylindrical and drawn out bodies such as artificial casings, as in claims 1 to 6, characterised in that the artificial casing is a fibrous casing.

**9.-** An improved packaging to pack largely cylindrical and drawn out bodies such as artificial casings, as in claims 1 to 6, characterised in that the artificial casing is a plastic casing.

**10.-** An improved packaging to pack largely cylindrical and drawn out bodies such as artificial casings, as in claims 1 to 6, characterised in that the artificial casing is a collagen casing.
